# EUROPÄISCHE PATENTSCHRIFT

(11) **EP 2 932 875 B1**
(45) Veröffentlichungstag und Bekanntmachung des Hinweises auf die Patenterteilung: **21.06.2017**
(21) Anmeldenummer: 15154682.7
(22) Anmeldetag: 11.02.2015
(51) Int. Cl.: A47J 41/02, B65D 81/38

(54) **Isolierkanne**
Thermally insulated vessel
Verseuse isotherme

(30) Priorität: 14.04.2014 DE 102014105283
(43) Veröffentlichungstag der Anmeldung: 21.10.2015
(73) Patentinhaber: Emsa GmbH, 48282 Emsdetten (DE)
(72) Erfinder:
(74) Vertreter: Claessen, Rolf

(56) Entgegenhaltungen:
- DE-A1- 3 613 293
- DE-U1-202013 008 318
- GB-A- 691 177
- US-A- 2 791 573
- US-A- 3 311 249

## Beschreibung

Die Erfindung betrifft einen Kannenkörper für eine Isolierkanne, die Isolierkanne selbst und ein Verfahren zur Herstellung der Isolierkanne.

Bislang wird der Kannenkörper von Isolierkannen aus thermoplastischen Werkstoffen oder aus Metall gefertigt. Metallische Kannenkörper sind relativ schwer. Thermoplastische Kannenkörper verformen leicht bei Hitzeeinwirkung. Auf die Kannen wurden die Dekore bislang über Siebdruck oder Tampondruck aufgebracht. Dadurch waren die Dekore bislang nicht kratzfest, nicht sehr spülmaschinenfest und sind oft schnell vergilbt.

CN 202497017 U, CN 2037199 U und CN 1042518 A beschreiben Isolierkannen ohne Gewinde im unteren Bereich des Kannenkörpers.

US 3,311,249 and US 691,177 beschreiben eine Isolierkannen, in der der Kannenkörper aus Duroplast sein kann.

Die Aufgabe der vorliegenden Erfindung besteht darin, einen Kannenkörper bereitzustellen, der leicht und gleichzeitig relativ hitzestabil ist.

Die der Erfindung zugrunde liegende Aufgabe wird in einer ersten Ausführungsform durch einen
Kannenkörper für eine Kanne (12),
a. der im unteren Bereich des Kannenkörpers (10) ein Gewinde (14) aufweist, und
b. wenigstens ein Teil des Kannenkörpers (10) aus einem Material besteht, das überwiegend einen Duroplast enthält,
**dadurch gekennzeichnet, dass die Gewindetiefe des ersten Gewindeganges (16) des Gewindes (14) von der Unterkante des Kannenkörpers (10) aus tiefer ist als die Gewindetiefe des letzten Gewindeganges (18) des Gewindes (14) von der Unterkante des Kannenkörpers (10) aus.**

Dadurch können Kannen und insbesondere Isolierkannen mit temperaturunabhängiger Verwindungssteifigkeit bereitgestellt werden.

Dadurch kann auch bei konischen Kannenkörpern der Bodeneinsatz gut durch das Gewinde festgehalten werden.

Gegenstände aus Duroplast wie Melaminharz werden bislang aus dem Pressformen über Zwangsentformung entfernt. Daher erschien es bislang als unmöglich, moderne Isolierkannen aus Duroplasten herzustellen, da die modernen Isolierkannen als Stellfläche ein in den Mantel eingeschraubtes Bodenteil aufweisen. Das zugehörige Schraubgewinde des Mantels wird bei Zwangsentformung durch die Sprödigkeit der Duroplaste zwangsläufig zerstört.

Daher gab es bislang das Vorurteil, dass der Mantel herkömmlicher Isolierkannen mit einem eingeschraubten Bodeneinsatz nicht aus Duroplasten hergestellt werden kann. Dieses jahrzehntealte Vorurteil haben die Erfinder in der vorliegenden Erfindung überwunden und erfolgreich einen Mantel einer Isolierkanne beispielsweise ganz aus Duroplast hergestellt. Die Erfinder haben herausgefunden, dass sich auch für Duroplaste Formen mit einem Ausdrehkern realisieren lassen, so dass beispielsweise ein Mantel für eine Isolierkanne aus Duroplast aus einer Form ausgedreht werden kann.

Durch den Anteil an Duroplast kann eine Kanne mit einem erfindungsgemä-ßen Kannenkörper auch beispielsweise wesentlich flexibler und haltbarer dekoriert werden. Bevorzugte Ausführungsformen des Dekors sind unten beschrieben.

### Material des Kannenkörpers

Vorzugsweise ist der Duroplast ein Aminoplast, besonders bevorzugt ein Harnstoffharz. Der Aminoplast kann beispielsweise ausgewählt sein aus Melaminharz, Melamin-Phenol-Formaldehyd-Harz (MPF), Melamin-Harnstoff-Formaldehyd-Harze (UMF), Melamin-Polyester, Harnstoffharz, Dicyandiamid, oder Mischungen derselben. Harnstoffharz ist besonders bevorzugt, da es beispielsweise gegenüber Melamin beständiger gegen Bruch ist.

Der Duroplast ist vorzugsweise ein Reaktionsprodukt aus einer Ausgangszusammensetzung, die einerseits Formaldehyd und andererseits Harnstoff und/oder Harnstoffderivat enthält.

Unter den oben genannten Harnstoffderivaten sind substituierte Harnstoffe, Thioharnstoff, substituierte Thioharnstoffe und die Kohlensäureester bevorzugt. Stärker bevorzugt sind die substituierten Harnstoffe, Thioharnstoff und die Kohlensäureester. Bevorzugt sind hierunter Thioharnstoff, N,N'-Dimethylharnstoff, N,N'-Diethylharnstoff, N,N'-Di-n-butylharnstoff, N,N'-Diisobutylharnstoff, N,N,N',N'-tetramethylharnstoff, Dimethylcarbonat, Diethylcarbonat, Ethylencarbonat und 1,2-Propylencarbonat.

Die Ausgangszusammensetzung kann auch Faserstoff und/oder Zellstoff enthalten. Der Duroplast enthält vorzugsweise Faserstoff und/oder Zellstoff in einer Menge in einem Bereich von 10 bis 50 Gew.%, besonders bevorzugt in einem Bereich von 20 bis 40 Gew.%. Dadurch ist der Duroplast besonders unempfindlich gegen mechanische Einflüsse.

Die Ausgangszusammensetzung kann ein Pulver sein.

Vorzugsweise ist wenigstens ein Teil des Mantels des Kannenkörpers aus einem Duroplast.

Der Kannenkörper besteht vorzugsweise zumindest im Bereich des Gewindes aus einem Duroplast.

Vorzugsweise besteht der Mantel des Kannenkörpers aus Duroplast. Dies hat den besonderen Vorteil, dass die Isolierkanne besonders leicht und gleichzeitig hitzebeständig sein kann.

Der Mantel des Kannenkörpers hat vorzugsweise zumindest über 80 % der Mantelaußenfläche eine Wandstärke in einem Bereich von 1 bis 4 mm, besonders bevorzugt in einem Bereich von 1,5 bis 3 mm.

### Gewinde

Der Mantel weist vorzugsweise an seinem unteren Ende ein Gewinde auf. Dieses Gewinde kann den Bodeneinsatz aufnehmen.

Vorzugsweise liegt die Gewindesteigung des Gewindes in einem Bereich von 2 bis 8 mm.

Vorzugsweise ist das Gewinde ein Trapezgewinde, besonders bevorzugt ein gerundetes Trapezgewinde. Der Flankenwinkel liegt vorzugsweise in einem Bereich von 35° bis 60°. Es hat sich herausgestellt, dass sich dadurch bei der Entformung des Mantels ein besonders geringer Widerstand einstellt.

Vorzugsweise liegt die Gewindetiefe des ersten Gewindeganges des Gewindes von der Unterkante des Kannenkörpers aus in einem Bereich von 0,4 bis 4 mm, besonders bevorzugt in einem Bereich von 1 bis 1,7 mm. Dadurch kann die Bodenplatte besonders fest und sicher im Boden des Mantels gehalten werden.

Das Gewinde weist vorzugsweise 3 bis 7 Gewindegänge auf.

Vorzugsweise ist das Gewinde rechtsdrehend. Dadurch kann der fertig hergestellte Mantel leicht und intuitiv aus der Form durch Drehung entformt werden.

### Oberer Rand

Der Kannenkörper und insbesondere der Mantel können am oberen Rand vorzugsweise zwei gegenüberliegende Ausnehmungen aufweisen. Vorzugsweise haben die Ausnehmungen eine Tiefe in einem Bereich von 2 bis 15 mm, besonders bevorzugt in einem Bereich von 6 bis 9 mm. Vorzugsweise haben die Ausnehmungen eine Breite in einem Bereich von 1 bis 10 mm, besonders bevorzugt in einem Bereich von 3 bis 7 mm. Dadurch kann man den Mantel sehr leicht nach der Herstellung aus der Form entformen, indem man beispielsweise eine Stange in die Ausnehmungen legt und dreht.

### Ausgestaltung der Isolierkanne

Der Mantel kann auch ein Dekor aufweisen. Dieses Dekor kann bei der Herstellung in die Form eingelegt werden. Beispielsweise kann ein gedrucktes Dekor, beispielsweise auf einem Papier, in die Form eingelegt werden und anschließend mit einer dünnen Schicht Ausgangszusammensetzung versehen werden und anschließend in der Form mit dem Mantel gegebenenfalls unter Wärmeeinwirkung verpresst werden.

Dadurch entsteht beispielsweise eine dünne Schicht aus Duroplast über dem Dekor, die dafür sorgt, dass der so dekorierte Mantel einer Kanne wesentlich kratzfester als die bedruckten thermoplastischen Mäntel des Standes der Technik sind. Zudem sind die so aufgebrachten Dekore wesentlich spülmaschinenfester und vergilben nicht so schnell.

Die Schicht aus Duroplast über dem Dekor beziehungsweise der Dekorschicht weist vorzugsweise eine Dicke in einem Bereich von 10 bis 400 µm auf.

### Weitere Ausführungsformen

In einer weiteren Ausführungsform wird die der Erfindung zugrunde liegende Aufgabe durch eine Isolierkanne gelöst, mit einem erfindungsgemäßen Kannenkörper, einem Ausguss und einem Deckel. Im Kannenkörper kann auch ein Isolierkolben angeordnet sein. Der Kannenkörper kann beispielsweise einen Mantel und gegebenenfalls auch einen Bodeneinsatz aufweisen. Dieser Bodeneinsatz kann beispielsweise in den Mantel oder in dessen unterer Öffnung eingeschraubt sein.

Um in einfacher Weise eine Kanne und insbesondere eine Isolierkanne zu erhalten, kann der Innenraum von einem in einen Kannenkörper eingesetzten Isolierkolben gebildet sein, der an seinem oberen Ende eine Aufnahmeöffnung aufweist. Ein solcher Isolierkolben kann ein doppelwandiger, evakuierter und verspiegelter Glaskolben, ein doppelwandiger und evakuierter Metallkolben oder ein einwandiger, umschäumter Glas-, Metall-, beziehungsweise Kunststoffkolben sein.

Weiterhin ist es als vorteilhaft anzusehen, wenn ein den Ausguss aufweisendes Kopfstück auf einer Kannenoberseite lösbar befestigt ist und in Befestigungsstellung mit einem die Aufnahmeöffnung umgebenden Randbereich in Dichtanlage ist. Auf diese Weise kann das gesamte Kopfstück beispielsweise zum Austausch des Isolierkolbens abgenommen werden. Das Kopfstück kann mit der Kannenoberseite verschraubt oder verrastet werden. Außerdem können durch das Kopfstück gleichzeitig eine Fixierung des Isolierkolbens innerhalb des Kannenkörpers und eine Abdichtung erfolgen.

Die Abdichtung zwischen Kopfstück und Isolierkolben kann in unterschiedlicher Weise erfolgen. Ein Beispiel ist die Anordnung einer Dichtung zwischen Kopfstück und Randbereich der Aufnahmeöffnung des Isolierkolbens.

Im Zusammenhang mit dem Kopfstück kann es sich als günstig erweisen, wenn dieses und der Handgriff einteilig ausgebildet sind. Auf diese Weise kann der Handgriff einerseits zum Verdrehen des Kopfstücks relativ zum Kannenkörper oder Isolierkolben eingesetzt werden.

Bei einem einfachen Ausführungsbeispiel eines Leitkanals kann dieser durch das Kopfstück hindurch den seitlich vom Kopfstück abstehenden Ausguss mit der Aufnahmeöffnung verbinden, wobei der Leitkanal insbesondere einen im Wesentlichen kreisförmigen Querschnitt aufweist und vertikal verläuft. Beim Aufsetzen des Kopfstücks wird in diesem Zusammenhang der Leitkanal automatisch der Aufnahmeöffnung zugeordnet und flüssigkeitsdicht mit dieser verbunden.

Es ist ebenso möglich, dass der Leitkanal andere Querschnittsformen aufweist, wie eckig oder oval, wobei in diesem Zusammenhang das Verschlusselement entsprechend geformt ist. Weiterhin kann der Leitkanal beispielsweise auch schräg zwischen Aufnahmeöffnung und Ausguss verlaufen.

Unabhängig vom Querschnitt des Leitkanals ist es für ein einfaches Anbringen des Deckels von Vorteil, wenn ein oberes Kanalende des Leitkanals zumindest teilweise von einem Aufschraubring umgeben ist, auf den der Deckel insbesondere aufschraubbar ist. Durch das Aufschrauben wird weiterhin sichergestellt, dass ein Verschlusselement korrekt zum Verschlie-ßen und Öffnen insbesondere des Leitkanals positioniert wird. Ebenso ist es möglich, dass der Deckel positionsgenau aufgesteckt wird, wobei das Verschlusselement auch so ausgebildet sein kann, dass es in Verschlussstellung den Leitkanal insgesamt verschließt und in Öffnungsstellung diesen insgesamt in Richtung Ausguss öffnet.

Ein einfaches Ausführungsbeispiel für einen Deckel kann darin gesehen werden, dass der Deckel ein im Wesentlichen ringförmiges Unterteil zur Lagerung von Verschluss- und Verschlussverstellelement und eine auf das Unterteil aufgesetzte Verschlusskappe aufweist. Gegebenenfalls kann die Verschlusskappe auch lösbar an dem Unterteil befestigt sein.

Zum einfachen Befestigen des Deckels am Aufschraubring kann das Unterteil einen mit einem Außengewinde versehenen Schraubring zum Einschrauben in den Aufschraubring und einen radial am oberen Ende des Schraubrings nach außen vorstehenden Auflagering aufweisen. Dabei kann das Unterteil mittels des Schraubrings so weit in den Aufschraubring eingeschraubt werden, bis der Auflagering mit seiner Unterseite am oberen Ende des Aufschraubrings aufliegt. In dieser Stellung ist dann beispielsweise sichergestellt, dass einerseits das Verschlusselement richtig positioniert ist und andererseits in dessen Schließstellung eine flüssigkeitsdichte Abdichtung des Innenraums gegenüber dem Ausguss gewährleistet ist.

Die Verbindung zwischen Verschlusselement und Deckel kann in unterschiedlicher Weise erfolgen. Beispielsweise könnte das Verschlusselement ähnlich wie bei der eingangs geschilderten Kanne als Verschlusskappe ausgebildet sein, die an einem Ende gemäß Erfindung verschwenkbar im Deckel gelagert ist.

Um eine gute Abdichtung zu erzielen, kann das Verschlusselement eine tellerförmige Dichtplatte aufweisen, von deren Unterseite ein in den Leitkanal oder in die Aufnahmeöffnung einsetzbarer Einsteckring absteht. Durch Einsteckring und Unterseite der Dichtplatte erhält man bei einem? Verschlusselement in Dichtstellung eine gute Abdichtung zwischen Aufnahmeöffnung und Ausguss.

Um beim Verschlusselement in Öffnungsstellung den Inhalt der Kanne gezielt dem Ausguss zuführen zu können, kann der Einsteckring zumindest eine dem Ausguss zuweisende Radialöffnung aufweisen. Durch diese fließt der Inhalt der Kanne in Richtung Ausguss, wobei gleichzeitig die Menge des ausfließenden Materials begrenzt werden kann.

Ein gut handhabbarer Handgriff ergibt sich dadurch, wenn dieser bogenförmig von der Kanne absteht oder in Richtung Kanne konkav gekrümmt verläuft. Erfindungsgemäß kann der Handgriff in seinem Inneren einen Hohlraum aufweisen, in dem der im Wesentlichen aus einem Federband gebildete Auslöser angeordnet ist. Als Betätigungselement für den Auslöser steht vom Federband in Richtung Kanne aus dem Handgriff ein Triggerelement vor. Durch Drücken des Triggerelementes in Richtung Handgriff wird das Federband im Wesentlichen von der Kanne wegbewegt und an eine Innenseite des Hohlraums angelegt. Durch das Verstellen des Federbandes wird dessen Eingriffsende ebenfalls radial nach außen bezüglich des Deckels bewegt und über die Bewegungsverbindung mit dem Verbindungsteil und dessen Verbindung über das Band zum Lagerteil um seine Schwenkachse in beispielsweise Gegenuhrzeigerrichtung verschwenkt. Dadurch wird das Tragende in Richtung Verschlusskappe bewegt und über die Bewegungsverbindung mittels der Lagerarme wird das Verschlusselement gegen die federelastische Wirkung des Balgelementes nach oben bewegt, wodurch eine Fluidverbindung zwischen Aufnahmeöffnung und Ausguss hergestellt wird. Wird das Triggerelement nicht mehr betätigt, erfolgt eine Rückstellung des Verschlusselementes insbesondere durch das Balgelement, wobei die Rückstellung des Verschlusselementes sowie auch von Lagerteil und Verbindungsteil durch die Elastizität des Federbandes des Auslösers unterstützt wird.

Es gibt auch ein Verfahren zur Herstellung eines Kannenkörpers, dadurch gekennzeichnet, dass der Kannenkörper bei der Entformung aus einem Gewinde einer Form herausgedreht wird, das in das Gewinde des Kannenkörpers eingreift.

Vorzugsweise wird bei dem erfindungsgemäßen Verfahren eine erfindungsgemäße Kanne und insbesondere eine erfindungsgemäße Isolierkanne hergestellt.

Weitere praktische Ausführungsformen und Vorteile der Erfindung sind nachfolgend im Zusammenhang mit den Zeichnungen beschrieben.

Im Folgenden wird besonders auf die erfindungswesentlichen und bevorzugten Merkmale eingegangen. Im Übrigen kann eine erfindungsgemäße Isolierkanne auf übliche Art wie beispielsweise aus DE 36 13 293 A1 bekannt hergestellt werden.

Es zeigen:

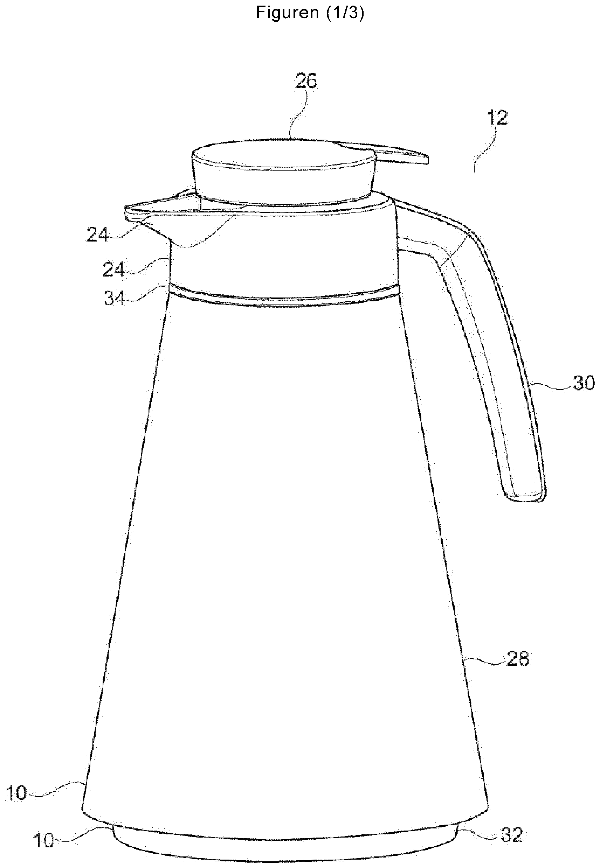

- Fig. 1: eine Isolierkanne 12 mit einem Mantel 28 als Teil des Kannenkörpers 10, einem Handgriff 30 mit einem als Aufnahme für einen Kannendeckel 26 sowie als Ausguss ausgebildetem Kopfstück 24. Der Mantel 28 ist, abgesehen von einem einschraubbaren Bodeneinsatz 32, einstückig aus einem üblichen Harnstoffharz hergestellt, der mit 30 Gew.% bezogen auf das Gewicht des Mantels 28 mit Zellstoff gefüllt ist. Zwischen dem Kopfstück 24 und dem Kannenkörper 10 ist ein Dichtring 34 angeordnet. Der Mantel 28 zeigt an seinem oberen Rand 20 eine Ausnehmung 22, die auf beiden gegenüberliegenden Seiten des oberen Randes 20 des Mantels 28 angeordnet ist.

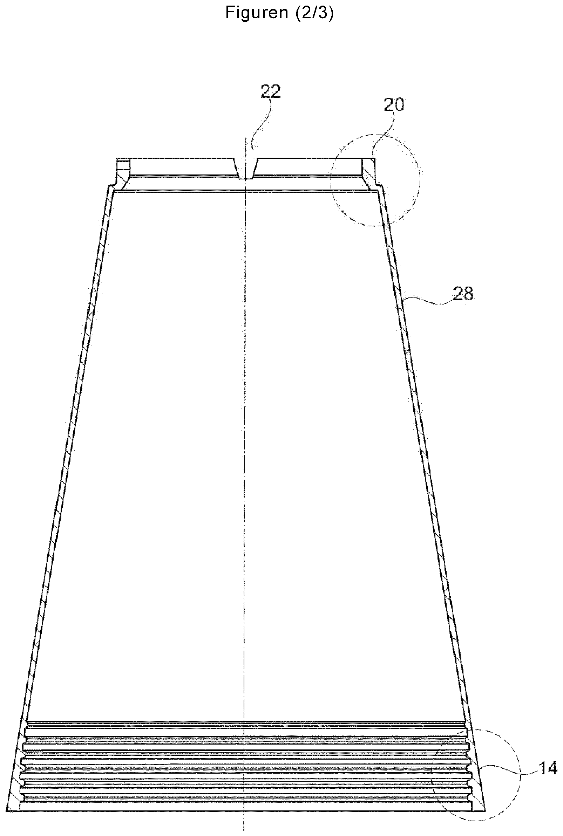

- Fig. 2: zeigt den Mantel 28 mit dem Gewinde 14.

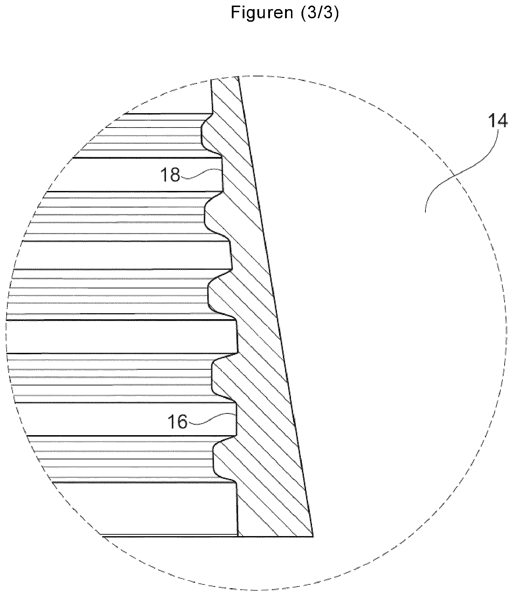

- Fig. 3: zeigt einen Detailausschnitt von Fig. 2 mit dem Gewinde 14. Man erkennt ein abgerundetes Trapezgewinde 14. Der erste Gewindegang 16 vom unteren Rand 36 des Mantels 28 aus ist tiefer als der letzte Gewindegang 18 vom unteren Rand 36 des Mantels 28 aus.

Im Folgenden wird kurz die Herstellung des erfindungsgemäßen Mantels 28 beschrieben. Es wird vor allem auf die erfindungswesentlichen und bevorzugten Merkmale eingegangen. Im Übrigen kann der Mantel 28 wie beispielsweise in US 2,791,573 A oder EP 0051821 A1 beschrieben hergestellt werden.

Anders als sonst üblich bei Mänteln 28 von Isolierkannen 12 findet die Entformung aus der Pressform nicht durch Zwangsentformung statt, da ansonsten das Gewinde 14 Schaden nehmen würde. Dies wurde in Versuchen bestätigt. Die Form wird im Unterschied zum Stand der Technik um den Mantel 28 herum entfernt und anschließend wird am oberen Ende 20 in die gegenüberliegenden Ausnehmungen 22 ein Werkzeug wie beispielsweise eine in die Ausnehmungen 22 passende Stange gelegt und der Mantel 28 aus der Form herausgedreht. Dies funktioniert deshalb, da die Form im Bereich des Gewindes 14 des Mantels 28 zwangsläufig ein Gegengewinde aufweist und der ganze Mantel 28 daher aus der Form herausgeschraubt werden kann.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Kannenkörper
- 12: Kanne
- 14: Gewinde
- 16: erster Gewindegang des Gewindes
- 18: letzter Gewindegang des Gewindes
- 20: oberer Rand des Mantels
- 22: Ausnehmung
- 24: Kopfstück mit Ausguss
- 26: Deckel
- 28: Mantel
- 30: Handgriff
- 32: Bodeneinsatz
- 34: Dichtring
- 36: unterer Rand des Mantels

## Patentansprüche

1. Kannenkörper für eine Kanne (12),
a. der im unteren Bereich des Kannenkörpers (10) ein Gewinde (14) aufweist, und
b. wenigstens ein Teil des Kannenkörpers (10) aus einem Material besteht, das überwiegend einen Duroplast enthält,
**dadurch gekennzeichnet, dass die Gewindetiefe des ersten Gewindeganges (16) des Gewindes (14) von der Unterkante des Kannenkörpers (10) aus tiefer ist als die Gewindetiefe des letzten Gewindeganges (18) des Gewindes (14) von der Unterkante des Kannenkörpers (10) aus.**

2. Kannenkörper gemäß Anspruch 1, **dadurch gekennzeichnet, dass** der Duroplast ein Aminoplast, besonders bevorzugt ein Harnstoffharz ist.

3. Kannenkörper gemäß Anspruch 1 oder 2, **dadurch gekennzeichnet, dass** der Kannenkörper (10) zumindest im Bereich des Gewindes (14) aus einem Duroplast besteht.

4. Kannenkörper gemäß einem der Ansprüche 1 bis 3, **dadurch gekennzeichnet, dass** die Gewindesteigung des Gewindes (14) in einem Bereich von 2 bis 8 mm liegt.

5. Kannenkörper gemäß einem der Ansprüche 1 bis 4, **dadurch gekennzeichnet, dass** das Gewinde (14) ein Trapezgewinde (14), besonders bevorzugt ein gerundetes Trapezgewinde (14) ist.

6. Kannenkörper gemäß einem der Ansprüche 1 bis 5, **dadurch gekennzeichnet, dass** die Gewindetiefe des ersten Gewindeganges (16) des Gewindes (14) von der Unterkante des Kannenkörpers (10) aus in einem Bereich von 0,4 bis 2 mm, besonders bevorzugt in einem Bereich von 0,6 bis 1 mm liegt.

7. Kannenkörper gemäß einem der Ansprüche 1 bis 6, **dadurch gekennzeichnet, dass** der Kannenkörper (10) am oberen Rand (20) zwei gegenüberliegende Ausnehmungen (22) aufweist.

8. Kannenkörper gemäß einem der Ansprüche 1 bis 7, **dadurch gekennzeichnet, dass** die Ausnehmungen (22) eine Tiefe in einem Bereich von 2 bis 15 mm, besonders bevorzugt in einem Bereich von 6 bis 9 mm haben.

9. Isolierkanne mit einem Kannenkörper (10) gemäß einem Ansprüche 1 bis 8, einem Ausguss (24) und einem Deckel (26).

## Claims

1. A jug body for a jug (12),
a. which comprises a thread (14) in the lower area of the jug body (10), and
b. at least part of said jug body (10) is made of a material mainly containing a thermosetting plastic,
**characterised in that** the thread depth of the first thread turn (16) of the thread (14) from the lower edge of the jug body (10) is deeper than the thread depth of the last thread turn (18) of said thread (14) from the lower edge of said jug body (10).

2. The jug body according to claim 1, **characterised in that** the thermosetting plastic is an aminoplast, particularly preferably a urea resin.

3. The jug body according to claim 1 or 2, **characterised in that** the jug body (10) is made of a thermosetting plastic at least in the area of the thread (14).

4. The jug body according to any one of claims 1 to 3, **characterised in that** the thread pitch of the thread (14) ranges from 2 to 8 mm.

5. The jug body according to any one of claims 1 to 4, **characterised in that** the thread (14) is a trapezoidal thread (14), particularly preferably a rounded trapezoidal thread (14).

6. The jug body according to any one of claims 1 to 5, **characterised in that** the thread depth of the first thread turn (16) of the thread (14) from the lower edge of the jug body (10) ranges from 0.4 to 2 mm, particularly preferably from 0.6 to 1 mm.

7. The jug body according to any one of claims 1 to 6, **characterised in that** the jug body (10) comprises two opposite recesses (22) at the upper edge (20).

8. The jug body according to any one of claims 1 to 7, **characterised in that** the recesses (22) have a depth ranging from 2 to 15 mm, particularly preferably from 6 to 9 mm.

9. A thermal jug including a jug body (10) according to any one of claims 1 to 8, a spout (24) and a lid (26).

## Revendications

1. Corps de verseuse pour une verseuse (12),
a) qui comprend dans la zone inférieure du corps de verseuse (10) un filetage (14), et
b) dans lequel au moins une partie du corps de verseuse (10) est constituée d'un matériau qui contient principalement un plastique thermodurcissable,
**caractérisé en ce que** la profondeur de filet du premier filet (16) du filetage (14) à partir du bord inférieur du corps de verseuse (10) est plus grande que la profondeur de filet du dernier filet (18) du filetage (14) à partir du bord inférieur du corps de verseuse (10).

2. Corps de verseuse selon la revendication 1, **caractérisé en ce que** le plastique thermodurcissable est un aminoplaste, de préférence une résine à base d'urée.

3. Corps de verseuse selon la revendication 1 ou 2, **caractérisé en ce que** le corps de verseuse (10) est constitué d'un plastique thermodurcissable au moins dans la zone du filetage (14).

4. Corps de verseuse selon l'une quelconque des revendications 1 à 3, **caractérisé en ce que** le pas de filet du filetage (14) est de 2 à 8 mm.

5. Corps de verseuse selon l'une quelconque des revendications 1 à 4, **caractérisé en ce que** le filetage (14) est un filetage trapézoïdal (14), de préférence un filetage trapézoïdal (14) arrondi.

6. Corps de verseuse selon l'une quelconque des revendications 1 à 5, **caractérisé en ce que** la profondeur de filet du premier filet (16) du filetage (14) à partir du bord inférieur du corps de verseuse (10) est de 0,4 à 2 mm, de préférence de 0,6 à 1 mm.

7. Corps de verseuse selon l'une quelconque des revendications 1 à 6, **caractérisé en ce que** le corps de verseuse (10) comprend deux cavités (22) opposées au niveau du rebord supérieur (20).

8. Corps de verseuse selon l'une quelconque des revendications 1 à 7, **caractérisé en ce que** les cavités (22) ont une profondeur de 2 à 15 mm, de préférence de 6 à 9 mm.

9. Verseuse isolante comprenant un corps de verseuse (10) selon l'une des revendications 1 à 8, un bec verseur (24) et un couvercle (26).
